# EUROPEAN PATENT APPLICATION

(11) **EP 1 699 255 A1**
(43) Date of publication of application: **06.09.2006**
(21) Application number: 06250724.9
(22) Date of filing: 10.02.2006
(51) Int. Cl.: H04Q 7/38

(54) **Customized location area cluster paging**

(30) Priority: 24.02.2005 US 65504
(71) Applicant: LUCENT TECHNOLOGIES INC., Murray Hill, New Jersey 07974-0636 (US)
(72) Inventor: Benco, David S., Winfiled, Illinois 60190 (US); Nguyen, John C V., Naperville, Illinois 60565 (US)
(74) Representative: Sarup, David Alexander

(57) **Abstract**

A method for paging a mobile station **(40)** served by a wireless telecommunications network **(A)** is provided. The network **(A)** includes a plurality of base stations **(30)** serving corresponding cells **(32)** which the mobile station **(40)** selectively uses to access the network **(A)**. A plurality of location areas **(22)** are defined each encompassing a plurality of the aforementioned cells **(32)**. The method includes: receiving a registration signal from the mobile station **(40)** each time the mobile station **(40)** enters a new location area **(22)**; remembering the location area **(22)** from which the registration signal was last received; monitoring which cell **(32)** the mobile station **(40)** uses to access the network **(A)**; remembering the cell **(32)** last used by the mobile station **(40)** to access the network **(A)**; and, paging selected location areas **(22)** when the mobile station **(40)** is being sought, the location areas **(22)** that are paged being selected based upon the remember location area **(22)** and the remembered cell **(32)**.

## Description

### Field

The present inventive subject matter relates to the wireless or mobile telecommunications arts. Particular application is found in conjunction with paging a mobile station (MS), and the specification makes particular reference thereto. However, it is to be appreciated that aspects of the present inventive subject matter are also amenable to other like applications.

### Background

Wireless or mobile telecommunications networks are generally known in the art. A MS (e.g., a mobile telephone or other mobile or wireless end user device) obtains service and/or access to the wireless network via an over-the-air radio frequency interface with a base station (BS). Each BS provides the over-the-air interface for and/or serves a particular geographic coverage area known as a cell. Typically, a plurality of base stations are operatively connected to and/or served by a mobile switching center (MSC) that is responsible for routing traffic for a particular MS to the appropriate BS currently serving that MS (i.e., to the cell in which the MS is currently located).

The "mobility" in mobile communications is commonly achieved in part via two communication channels between the BS and MS, namely, a paging channel and an access channel. The paging channel is used to verify and/or establish the location of the MS within the network and to deliver incoming calls to the MS. The access channel is used by the MS for registration purposes, i.e., to report power-up of the MS, to report changes in the location of the MS, etc.

Typically, a mobile service provider seeks to maximize the number of busy hour call attempts (BHCA) in order to serve an increasing number of mobile subscribers. One obstacle to achieving this goal, however, is the availability of sufficient paging channel bandwidth. While there are known ways to increase paging capacity, they often involve considerable expense and/or lead time, e.g., adding new bandwidth. Accordingly, it is desirable to optimize the usage of existing paging channel bandwidth.

Historically, when an incoming call arrived at a MSC for a MS, all the cells in the entire MSC would be paged in order to contact the MS and deliver the call. That is to say, the MSC would signal all the base stations it served to transmit a paging signal over their paging channels to verify or establish the location of the MS within one of the cells. This approach, however, used a considerable amount of paging channel bandwidth insomuch as all the cells within the geographic region served by the MSC where paged for any given instance.

A recent improvement was to partition the cells served by the MSC into a plurality of zones, i.e., groups of neighboring cells known as location areas (LAs), and begin paging only those cells in the last known LA of the MS being sought. While this reduced the load on the paging channel because fewer cells were instructed to page the MS for any given instance, the load on the access channel increased because registration messages were sent by the MS to the MSC every time a LA boundary was crossed. That is to say, in order for the MSC to know which LA the MS was in at any given time, the MS would signal the MSC using the access channel each time it entered a new LA. Smaller LAs in turn mean that the LA boundaries are closer to one another, which in turn means that as a mobile subscriber travels they are more likely to cross more boundaries. Accordingly, increasing the number of LAs per MSC would reduce the size of each LA and the load on the paging channel, but at the expense of increasing the load on the access channel. Service providers have found that creating more than a few LAs per MSC results in access channel overload. However, there remains the desire to further reduce the paging channel load in order to support more mobiles and/or more services.

A generally effective approach for paging a MS is to being paging a small geographic area, and if there is no response, to increase the size of the area that is paged. Therefore, when an MS is being sought, usually, only the last-seen or last-registered LA for that MS is paged first. If there is no response from the paged MS to the first attempt, then a second paging attempt is made using what is known as LA cluster (LAC) paging. In traditional LAC paging, the last-seen or last-registered LA along with all of its neighboring LAs receive the page.

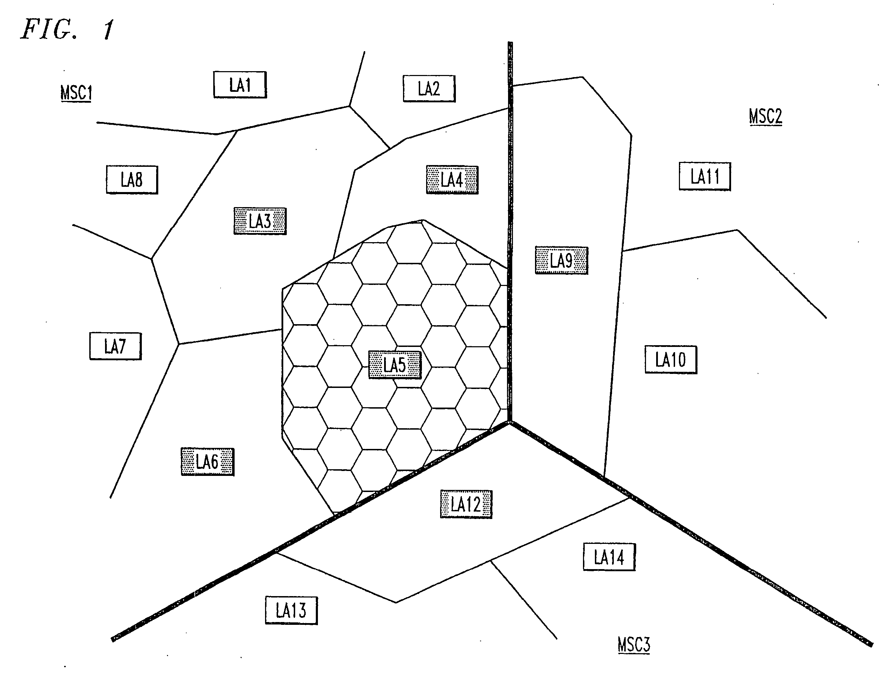

For example, FIGURE 1 is used to illustrate a traditional LAC paging configuration. As shown, there are three MSC serving neighboring geographic areas, namely, MSC1, MSC2 and MSC3. Each MSC has its coverage area divided into a plurality of LAs. In the illustrated example, MSC1 serves LA1 through LA8, MSC2 serves LA9 through LA11, and MSC3 serves LA12 through LA14. Each LA in turn contains a plurality of cells, for example, as illustrated in LA5. As a MS travels among the LAs, it registers its current location with the various MSCs each time it enters a new LA, i.e., each time it crosses from one LA into the next or each time it crosses an LA boundary. For example, the MS registers with the MSC serving its location by sending a registration signal to the MSC using the access channel. In this manner, the MSC is able to remember the most recent LA from which the MS registered. For example, the MSC may store the current registration information (e.g., the identity of the LA from which the MS last registered) in a location register or database. Suitably, the location registers or databases of the other MSCs are updated accordingly. Assuming for purposes of this example that the sought MS last registered from LAS, then a traditional LAC paging protocol would page all the LAs highlighted in gray, that is LA5 (i.e., the last known LA of the MS) along with LA3, LA4, LA9, LA12 and LA6 (i.e., all the neighboring LAs surrounding the last known LA of the MS).

While LAC paging is quite effective in locating a MS that has crossed an LA boundary, a disadvantage remains insomuch as the geographic area encompassed by an LA and all its surrounding LAs is still significantly large, thereby resulting in a significant number of cells being effected by a given LAC page and a significant amount of paging channel bandwidth being used. Therefore, it is desirable to reduce the geographic area paged by LAC paging without significantly reducing the corresponding page response rate of LAC paging, i.e., without significantly reducing the likelihood of verifying or establishing the location of the MS being sought with the LAC page.

Accordingly, a new and improved paging system and/or method for a wireless telecommunications network is disclosed that overcomes the above-referenced problems and others.

### Summary

In accordance with one embodiment, a method for paging a mobile station served by a wireless telecommunications network is provided. The network includes a plurality of base stations serving corresponding cells which the mobile station selectively uses to access the network. A plurality of location areas are defined each encompassing a plurality of the aforementioned cells. The method includes: receiving a registration signal from the mobile station each time the mobile station enters a new location area; remembering the location area from which the registration signal was last received; monitoring which cell the mobile station uses to access the network; remembering the cell last used by the mobile station to access the network; and, paging selected location areas when the mobile station is being sought, the location areas that are paged being selected based upon the remember location area and the remembered cell.

In accordance with another aspect, a system for paging a mobile station served by a wireless telecommunications network is provided. The network includes a plurality of base stations serving corresponding cells which the mobile station selectively uses to access the network. A plurality of location areas are defined, each location area encompassing a plurality of the aforementioned cells. The system includes: receiving means for receiving a registration signal from the mobile station each time the mobile station enters a new location area; location area remembering means for remembering the location area from which the registration signal was last received; monitoring means for monitoring which cell the mobile station uses to access the network; cell remembering means for remembering the cell last used by the mobile station to access the network; and, paging means for paging selected location areas when the mobile station is being sought, the location areas that are paged being selected based upon the remembered location area from location area remembering means and the remembered cell from the cell remembering means.

Numerous advantages and benefits of the inventive subject matter disclosed herein will become apparent to those of ordinary skill in the art upon reading and understanding the present specification.

### Brief Description of the Drawings

The present inventive subject matter may take form in various components and arrangements of components, and in various steps and arrangements of steps. The drawings are only for purposes of illustrating example embodiments and are not to be construed as limiting. Further, it is to be appreciated that the drawings are not to scale.

FIGURE **1** is a diagram illustrating how a wireless or mobile telecommunications network implements a traditional LAC paging protocol.

FIGURE **2** is a diagram illustrating a telecommunications network suitable for practicing aspects of the present inventive subject matter.

FIGURE **3** is a diagram used for illustrating an exemplary implementation of a customized LAC paging protocol embodying aspects of the present inventive subject matter.

### Detailed Description of Preferred Embodiments

For clarity and simplicity, the present specification shall refer to structural and/or functional elements, entities and/or facilities, relevant communication standards, protocols and/or services, and other components and features that are commonly known in the telecommunications art without further detailed explanation as to their configuration or operation except to the extent they have been modified or altered in accordance with and/or to accommodate the embodiment(s) presented herein.

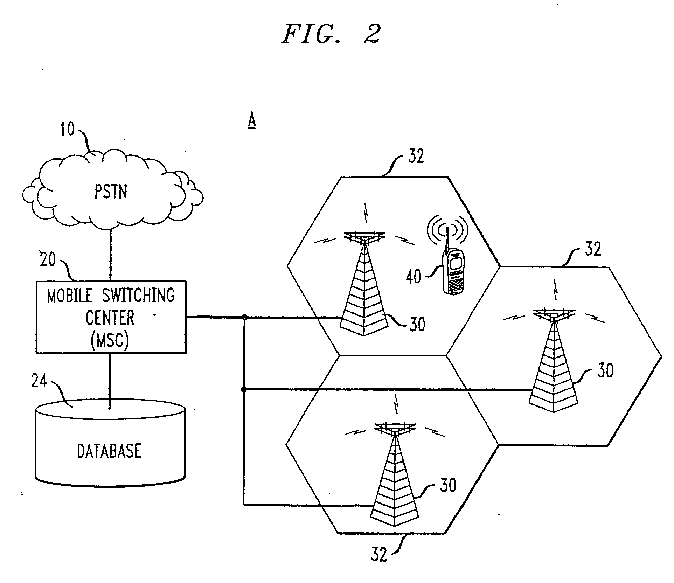

With reference to FIGURE **2,** a telecommunications network **A** includes a public switched telephone network **10** operatively connected to and/or in communication with a MSC **20** in the usual manner. The MSC **20** is operatively connected to and/or in communication with a plurality of base stations **30** in the usual manner. As is understood in the art, each BS **30** provides an over-the-air radio frequency interface for its respective geographic area or cell 32. Selectively, a MS (such as the exemplary MS 40 illustrated) is provided telecommunication services and/or otherwise accesses the network A via the interface and/or BS serving the cell in which the MS is located. In the usual manner two communication channels are selectively employed between the BS 30 and MS 40, namely, a paging channel and an access channel. The paging channel is used to verify and/or establish the location of the MS 40 within the network A and to deliver incoming calls to the MS 40. The access channel is used by the MS 40 for registration purposes, i.e., to report power-up of the MS 40, to report changes in the location of the MS 40, etc.

While only one MSC is illustrated in FIGURE 2 for purposes of simplification and clarity, it is to be appreciated that the network A may in fact include any number of one or more MSCs that are similarly situated and/or arranged. Additionally, while three BS 30 and three corresponding cells 32 are illustrated in FIGURE **2,** it is to be appreciated that more or less than three base stations and/or cells may be similarly situated with respect to any of the one or more MSCs in the network A. That is to say, each MSC in the network A may optionally serve any number of one or more base stations and/or corresponding cells. Additionally, while only one exemplary MS is illustrated in FIGURE 2, the network A optionally serves any number of one or more mobile stations similarly situated and/or arranged in any of the one or more cells 32.

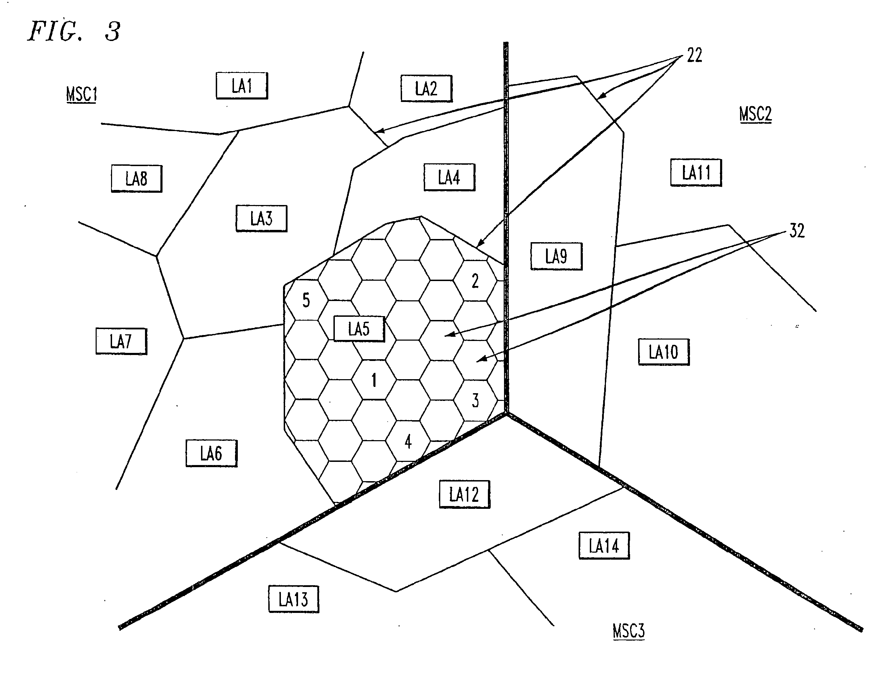

With reference to FIGURE 3, three MSCs 20 of the network A are shown serving neighboring geographic areas. For distinction purposes they are labeled MSC1, MSC2 and MSC3. Each MSC 20 has its coverage area divided into a plurality of LAs 22. For distinction purposes they are labeled LA1 through LA14. In the illustrated example, MSC1 serves LA1 through LA8, MSC2 serves LA9 through LA11, and MSC3 serves LA12 through LA14. Each LA 22 in turn contains a plurality of cells 32, for example, as illustrated in LA5. As the MS 40 travels among the LAs 22, it registers its current location with the various MSCs 20 each time it enters a new LA 22, i.e., each time it crosses from one LA 22 into the next or each time it crosses an LA boundary. For example; the MS 40 registers with the MSC 20 serving its location by sending a registration signal to the MSC **20** using the access channel. In this manner, the MSC **20** is able to remember the most recent LA **22** from which the MS **40** registered. For example, the MSC **20** may store the current registration information (including, e.g., the identity of the LA from which the MS last registered) in a location register or database **24** (see FIGURE **2).** Suitably, the location registers or databases of the other MSCs **20** are updated accordingly. Alternately, the database **24** is arranged within the network **A** so as to be accessible by each of the MSCs.

In addition to the last or most recent LA **22** from which MS **40** registered, the last or most recent cell **32** accessed by the MS **40** is also monitored and/or remembered by the network **A.** This information is optionally stored along with and/or as part of the current registration information in the database **24.** Cell access events include those events where the MS **40** accesses a cell **32,** i.e., the MS **40** sends, receives or otherwise exchanges a transmission to, from or with a BS **30.** For example, a cell access event may include, registration of the MS **40,** the MS **40** receiving an incoming call, the MS **40** placing an outgoing call, the transmission of packet data to or from the MS **40,** short message service (SMS) message receipt or transmittal, etc. For each of these activities, the network **A** is able to determine which BS **30** and/or cell **32** the MS **40** is using. Suitably, this cell location and/or identity is captured and/or updated at each cell access event, e.g., by the MSC **20.** Suitably, the captured cell location and/or identity for the last or most recent cell access event is then maintained or stored in the database **24** along with and/or as part of the current registration information including the last or most recent LA from which the MS **40** registered.

Suitably, a customized LAC (CLAC) paging protocol is employed to page the MS **40** when it is being sought by the network **A.** The CLAC protocol uses the current registration information, e.g., in the database **24,** including the last known LA of the MS and the last known cell of the MS, to determine which LAs **22** are to be paged. That is to say, the network **A** knows and/or remembers the last or most recent LA **22** from which the MS **40** registered and the cell **32** the MS **40** use during its last or most recent cell access event, and based upon this information, the CLAC paging protocol determines which LAs **22** are to be paged when seeking the MS **40.**

For purposes of explanation, the last or most recent LA **22** from which the MS **40** registered shall be referred to herein as the last registered LA **22,** and the cell **32** use by the MS **40** for the last or most recent cell access event shall be referred to herein as the last used cell **32.** In accordance with a suitable CLAC paging protocol, the last registered LA **22** is paged. Optionally, a number of particular LAs **22** neighboring the last registered LA **22** are also paged, depending upon the location of the last used cell **32** within the last registered LA **22.** Suitably, if the last used cell **32** is located at or towards the interior or center of the last registered LA **22,** then no neighboring LAs **22** are paged along with the last registered LA **22,** i.e., only the last registered LA **22** is paged. On the other hand, if the last used cell **32** is located at or towards the exterior or boundary of the last registered LA **22,** then one or more neighboring LAs **22** nearest the last cell used **32** are also paged along with the last registered LA **22.** However, the number of neighboring LAs **22** which are also paged is suitably less than the total number of LAs **22** neighboring the last registered LA **22.** In this way, paging channel bandwidth is conserved as compared to traditional LAC paging wherein all the LAs **22** neighboring the last registered LA **22** are paged along with the last registered LA **22.**

Assuming that LA5 is the last registered LA **22,** we shall consider the paging determinations made by an exemplary CLAC paging protocol in five different instances: (i) where the last used cell **32** is the cell labeled 1; (ii) where the last used cell **32** is the cell labeled 2; (iii) where the last used cell **32** is the cell labeled 3; (iv) where the last used cell **32** is the cell labeled 4; and, (v) where the last used cell **32** is the cell labeled 5.

In case (i), cell 1 is deemed sufficiently interior or centrally located within LA5, accordingly the CLAC paging protocol calls for the paging of LA5 only. In case (ii), cell 2 is deemed sufficiently near or at the exterior boundary of LAS, accordingly the CLAC paging protocol calls for the paging of LA5 along with the paging of those neighboring LAs sufficiently near and/or nearest cell 2, i.e., LA4 and LA9 in this case. In case (iii), cell 3 is deemed sufficiently near or at the exterior boundary of LA5, accordingly the CLAC paging protocol calls for the paging of LA5 along with the paging of those neighboring LAs sufficiently near and/or nearest cell 3, i.e., LA9 and LA12 in this case. In case (iv), cell 4 is deemed sufficiently near or at the exterior boundary of LA5, accordingly the CLAC paging protocol calls for the paging of LA5 along with the paging of those neighboring LAs sufficiently near and/or nearest cell **4,** i.e., only LA12 in this case. In case (v), cell 5 is deemed sufficiently near or at the exterior boundary of LA5, accordingly the CLAC paging protocol calls for the paging of LA5 along with the paging of those neighboring LAs sufficiently near and/or nearest cell 5, i.e., LA3, LA4 and LA6 in this case.

It is to be noted that LA5 has a total of five neighboring LAs **22,** namely, LA3, LA4, LA9, LA12 and LA6. In traditional LAC paging, all five of the neighboring LAs **22** would be paged regardless of the different instances proposed above. However, with a CLAC paging protocol as proposed herein, paging channel bandwidth is conserved by customizing the paging for different instances. The customized paging is selected so that less than all the neighboring LAs **22** are paged in any given instance (e.g., paging a minimum number of LAs **22)**, while optimizing a likelihood of paging the correct LA **22,** i.e., the one in which the sought MS **40** is located. For example, if the last used cell **32** where located within LA5 nearer to LA4 than LA6, it is a reasonable assumption that if the MS **40** is no longer in LA5 it is more likely to have traveled to the closer LA4 rather than the farther LA6. Accordingly, to conserve paging channel bandwidth while increasing the likelihood of the page actually reaching the MS **40,** it is beneficial to page LA4 (i.e., the LA **22** in which the MS **40** is more likely to be found) and not page LA6 (i.e., the LA **22** in which the MS **40** is less likely to be found).

Of course, the CLAC paging protocol may vary across the network A depending on the relative arrangement of neighboring LAs **22** and/or the configuration of cells **32** within the LAs **22.** That is to say, the CLAC paging protocol is optionally tuned or otherwise adjusted to account for the particular layout of LAs, cells and/or other geographic considerations in a particular area. Suitably, for a given LA **22,** a look-up table (LUT) or the like is used to map a CLAC paging area to each cell **32** within that LA **22.** For example, a LUT for LA5 would relate each cell **32** within LA5 to a CLAC paging area including one or more LAs **22.** Accordingly, when the last registered LA **22** is LA5, the LUT for LA5 is accessed. Using the accessed LUT for LA5, the last used cell **32** is used as an index to look-up the CLAC paging area for that cell **32.** Accordingly, the LAs **22** identified in the LUT as part of the CLAC paging area for the cell **32** are paged.

Suitably, the CLAC paging protocol is employed in a multi-tiered or multilevel paging architecture. Each tier or level of the paging architecture represents one paging attempt. When an incoming call arrives for the MS **40** at the MSC **20,** paging attempts continue to progress through the levels or tiers in turn until the MS **40** responds to the page or the last level or tier is reached. At an optional first level or tier, the first paging attempt is suitably limited to paging only the last registered LA **22.** At an optional second level or tier, the second paging attempt suitably employs the CLAC paging protocol. At an optional third level or tier, the third paging attempt is suitably a traditional LAC page.

It is to be appreciated that in connection with the particular exemplary embodiments presented herein certain structural and/or function features are described as being incorporated in defined elements and/or components. However, it is contemplated that these features may, to the same or similar benefit, also likewise be incorporated in other elements and/or components where appropriate. It is also to be appreciated that different aspects of the exemplary embodiments may be selectively employed as appropriate to achieve other alternate embodiments suited for desired applications, the other alternate embodiments thereby realizing the respective advantages of the aspects incorporated therein.

It is also to be appreciated that particular elements or components described herein may have their functionality suitably implemented via hardware, software, firmware or a combination thereof. Additionally, it is to be appreciated that certain elements described herein as incorporated together may under suitable circumstances be stand-alone elements or otherwise divided. Similarly, a plurality of particular functions described as being carried out by one particular element may be carried out by a plurality of distinct elements acting independently to carry out individual functions, or certain individual functions may be split-up and carried out by a plurality of distinct elements acting in concert. Alternately, some elements or components otherwise described and/or shown herein as distinct from one another may be physically or functionally combined where appropriate.

In short, the present specification has been set forth with reference to preferred embodiments. Obviously, modifications and alterations will occur to others upon reading and understanding the present specification. It is intended that the invention be construed as including all such modifications and alterations insofar as they come within the scope of the appended claims or the equivalents thereof.

## Claims

1. A method for paging a mobile station served by a wireless telecommunications network including a plurality of base stations serving corresponding cells which the mobile station selectively uses to access the network, wherein a plurality of location areas are defined, each location area encompassing a plurality of said cells, the method comprising:
(a) receiving a registration signal from the mobile station each time the mobile station enters a new location area;
(b) remembering the location area from which the registration signal was last received;
(c) monitoring which cell the mobile station uses to access the network;
(d) remembering the cell last used by the mobile station to access the network; and,
(e) paging selected location areas when the mobile station is being sought, said location areas that are paged being selected based upon the remember location area from step (b) and the remembered cell from step (d).

2. The method of claim 1, wherein the location areas selected for paging include:
(i) the remembered location area; and,
(ii) depending upon a location of the remembered cell within the remembered location area, zero or more location areas neighboring the remember location area.

3. The method of claim 2, wherein if the location of the remembered cell is near an interior of the remembered location area, then zero location areas neighboring the remembered location are selected for paging.

4. The method of claim 2, wherein if the location of the remembered cell is near an exterior boundary of the remembered location area, then a number of neighboring location areas nearest the remembered cell are selected for paging.

5. The method of claim 1, wherein the remembered location area has a number N of neighboring location areas, and the number of neighboring location areas selected for paging is less than N.

6. A system for paging a mobile station served by a wireless telecommunications network including a plurality of base stations serving corresponding cells which the mobile station selectively uses to access the network, wherein a plurality of location areas are defined, each location area encompassing a plurality of said cells, the system comprising:
receiving means for receiving a registration signal from the mobile station each time the mobile station enters a new location area;
location area remembering means for remembering the location area from which the registration signal was last received;
monitoring means for monitoring which cell the mobile station uses to access the network;
cell remembering means for remembering the cell last used by the mobile station to access the network; and,
paging means for paging selected location areas when the mobile station is being sought, said location areas that are paged being selected based upon the remember location area from location area remembering means and the remembered cell from the cell remembering means.

7. The system of claim 6, wherein the location areas selected for paging by the paging means include:
(i) the remembered location area; and,
(ii) depending upon a location of the remembered cell within the remembered location area, zero or more location areas neighboring the remember location area.

8. The system of claim 7, wherein if the location of the remembered cell is near an interior of the remembered location area, then zero location areas neighboring the remembered location are selected for paging by the paging means.

9. The system of claim 7, wherein if the location of the remembered cell is near an exterior boundary of the remembered location area, then a number of neighboring location areas nearest the remembered cell are selected for paging by the paging means.

10. The system of claim 6, wherein the remembered location area has a number N of neighboring location areas, and the number of neighboring location areas selected for paging by the paging means is less than N.
